# EUROPEAN PATENT APPLICATION

(11) **EP 4 714 553 A1**
(43) Date of publication of application: **25.03.2026**
(21) Application number: 24201600.4
(22) Date of filing: 20.09.2024
(51) Int. Cl.: B05B 9/04, A61D 1/02, B05B 9/00, B05B 12/12, B05B 13/02, B05B 15/68

(54) **METHOD FOR THE INSTALLATION OF A SPRAYING DEVICE FOR SPRAYING A FLUID**

(71) Applicant: Boehringer Ingelheim Vetmedica GmbH, 55216 Ingelheim am Rhein (DE)
(72) Inventor: PORCHER, Ludovic, 55216 Ingelheim am Rhein (DE); KARCZYNSKI, Samuel, 55216 Ingelheim am Rhein (DE)
(74) Representative: Von Rohr Patentanwälte Partnerschaft mbB

(57) **Abstract**

The present invention relates to a method for the installation of a spraying device (1) for spraying a fluid, in particular a liquid vaccine solution, towards boxes (20) being conveyed past the spraying device (1), the boxes (20) preferably containing animals, in particular chickens or chicks, to be vaccinated by spray vaccination, the method comprising:
- receiving sensor signals (SS) in a sensor device (21) for detecting boxes (20) being conveyed past the spraying device,
- receiving box size data, the box size data representing a size of the boxes (20),
- automatically determining, based on the box size data and the sensor signals (SS), the speed of the boxes being conveyed past the spraying device, and
- automatically determining a type and/or number of nozzles to be used for spraying the fluid and/or an, in particular vertical, nozzle position to be set.

## Description

The present invention relates to a method for the installation of a spraying device for spraying a fluid towards boxes being conveyed past the spraying device and to a spraying device for spraying a fluid.

In particular, the present invention relates to the installation of a spraying device to be used in hatcheries for vaccinating large amounts of chickens or chicks by spray vaccination.

In hatcheries, chicks, for example one-day old chickens, are routinely vaccinated by spray vaccination. For this, the chicks are placed in boxes, each box containing a plurality of chicks to be vaccinated. The boxes are placed on a conveying device and are conveyed past a spraying device that sprays a liquid vaccine solution onto the boxes with the chicks. The vaccine solution is intended to reach the eyes and/or the respiratory tract of the chicks.

Usually, the spraying devices are installed manually by a technician. Each hatchery uses a certain conveying device with a certain conveying speed as well as boxes of a certain size. While usually only one box size is used in a certain hatchery, the box sizes may vary between different hatcheries and the conveying devices and/or conveying speeds may vary between different hatcheries. Therefore, the installation of the spraying device in the hatchery requires the determination of the speed of the boxes conveyed by the conveying devices. This is usually done manually using a stop watch. Moreover, the spraying device has to be equipped with a certain number and/or type of nozzles, which have to be selected from a plurality of available nozzles. Furthermore, the spraying device may be operated with different pressures and/or flow rates of the vaccine solution and the position of the nozzle(s) with respect to the conveying device may be adjusted. In order to find a suitable combination of these parameters, so that a desired amount of the vaccine solution reaches the boxes or chicks contained in the boxes, the technician hast to manually adjust and experiment with these parameters until the desired amount is achieved.

The described process of installing a spraying device in a hatchery is cumbersome and time-consuming and may take several hours.

The object of the present invention is to provide a solution which allows a quick, easy, and/or at least partially automated installation of a spraying device for spraying a fluid towards boxes being conveyed past the spraying device.

The above object is solved by the method according to claim 1, the spraying device according to claim 13, the computer program product according to claim 15 and/or the computer-readable medium according to claim 16. Advantageous developments are subject of the dependent claims.

In particular, the present invention relates to a method for the installation of a spraying device for spraying a fluid towards boxes being conveyed past the spraying device, the boxes preferably containing animals to be vaccinated by spray vaccination. The fluid may be a liquid vaccine solution. The animals to be vaccinated may be chickens or chicks.

The method according to the invention comprises:
- receiving sensor signals in a sensor device for detecting boxes being conveyed past the spraying device,
- receiving box size data, the box size data representing a size of the boxes,
- automatically determining, based on the box size data and the sensor signals, the speed of the boxes being conveyed past the spraying device, and
- automatically determining a type and/or number of nozzles to be used for spraying the fluid and/or a nozzle position to be set, wherein the nozzle position may be a vertical nozzle position.

This is conducive to a quick, easy and/or at least partially automated installation of the spraying device.

The method may further comprise receiving fluid volume data. The fluid volume data represent a fluid volume to be sprayed towards a box and/or represent a fluid volume to be sprayed in a single spray process. This allows installation in various environments and/or adapting the generated to spray to specific requirements.

Furthermore, the method may comprise displaying, with an electronic display device, one or more fields for entering a box size and/or a fluid volume, and receiving, with the electronic display device, box size data and/or fluid volume data entered in the respective fields. This is conducive to enhanced installation and/or operation of the spraying device, in particular during installation.

The method may further comprise displaying said type and/or number of nozzles and/or said nozzle position with an electronic display device. This is conducive to enhanced installation and/or operation of the spraying device, in particular during installation.

The method may further comprise selecting the type and/or number of nozzles from a predetermined set of available nozzles. This is conducive to enhanced determination of the nozzle(s) and/or increases the speed and/or efficiency of the method. Further, the complexity of the method is kept as low as possible.

The type and/or number of nozzles and/or the nozzle position may be determined with a function assigning different values representing box sizes, box speeds and/or fluid volumes to different values representing said type and/or number of nozzles and/or said nozzle position. This is conducive to an at least partially automated and flawless installation. Further, manual adjustments after installation are avoided or at least kept at a minimum.

Moreover, the method may comprise determining said function prior to installation of the spraying device by carrying out a series of tests analyzing the relationship between box size, box speed and/or fluid volume on the one hand and the type and/or number of nozzles and/or the nozzle position on the other hand. This is conducive to a reliable and systematic determination of the type and/or number of nozzles and/or the nozzle position.

The method may further comprise automatically determining, for example based on the box size data and/or the determined speed of the boxes, a time delay between detection of a box with the sensor device and performing a spray process in which fluid is sprayed towards the box. This enhances the installation, enables to ensure optimum vaccination and/or avoids waste of fluid.

The method may further comprise receiving adjustment data representing a desired adjustment of a fluid volume to be sprayed in single spray process and adjusting a set fluid volume based on the adjustment data. In addition, the method may comprise displaying, with an electronic display device, at least one field for entering the adjustment data and receiving, with the electronic display device, adjustment data entered in the at least one field. This can allow adjustment during or after installation in an easy fashion, in particular manual adjustment.

Further, the method may comprise:
- receiving sensor signals in a sensor device with different sensors, the different sensors detecting boxes being conveyed on different conveyor lines, and
- automatically determining said type and/or number of nozzles and/or said nozzle positions separately for different nozzles assigned to the different conveyor lines.

This allows installation of a spray device to be used with a conveying device having different conveyor lines and, therefore, increases the scope of application of the method.

Moreover, the method may comprise placing the spraying device in vicinity of a conveying device, so that the spraying device can spray fluid towards the conveying device or boxes being conveyed by the conveying device.

The method may further comprise:
- placing boxes on the conveying device, and/or
- conveying the boxes past the spraying device with the conveying device, and/or
- detecting the boxes being conveyed past the conveying device with the sensor device, and/or
- installing the determined type and/or number of nozzles and/or installing a nozzle in the determined nozzle position.

The method may be a computer-implemented method or a partially computer-implemented method, i.e. a method in which at least some of the steps are computer-implemented or performed by a computer.

According to another aspect, the present invention relates to a spraying device for spraying a fluid, for example a liquid vaccine solution, the spraying device having a sensor device and means adapted to execute the steps of the method described herein. With the spraying device, the advantages of the method are achieved accordingly.

The spraying device may have a spray unit, the spray unit having an inlet through which the fluid can be supplied to the spray unit, a pump with a pump chamber, and a nozzle for spraying the fluid, wherein the inlet is connected to the pump chamber and the pump chamber is connected to the nozzle, so that fluid can flow from the inlet to the pump chamber and from the pump chamber to the nozzle, wherein the spray unit comprises an inlet valve arranged between the inlet and the pump chamber and an outlet valve arranged between the pump chamber and the nozzle, and wherein the outlet valve is a controllable valve. This makes it possible to achieve a uniformly distributed spray with precisely controlled and constant droplet sizes from the very beginning of a spray process until the very end of a spray process while avoiding pollution of the sprayed fluid.

According to another aspect, the present invention relates to a computer program product comprising instructions to cause the spraying device as described herein to execute the steps of the method as described herein.

According to another aspect, the present invention relates to a computer-readable storage medium having stored thereon said computer program.

With the computer program product and the computer-readable storage medium, the advantages of the method are achieved accordingly.

The above-mentioned aspects and features of the present invention and the aspects and features of the present invention that are apparent from the claims and the following description can in principle be implemented independently from one another, but also in any combination or order.

Further aspects, advantages, features and properties of the present invention will become apparent from the claims and the following description of a preferred embodiment with reference to the drawings, in which:
- Fig. 1: shows a schematic drawing of a spraying device according to the invention;
- Fig. 2: shows a first schematic perspective view of the spraying device;
- Fig. 3: shows a second schematic perspective view of the spraying device;
- Fig. 4: shows a schematic top view of a system comprising the spraying device and a conveying device;

- Fig. 5: shows a schematic block diagram of a method for the installation of a spraying device according to the invention; and
- Fig. 6: shows a schematic representation of a function.

In the Figures, the same or similar parts are identified with the same similar reference numbers and may have similar advantages and properties, even if a repeated description is omitted.

### Preferred design of a spraying device

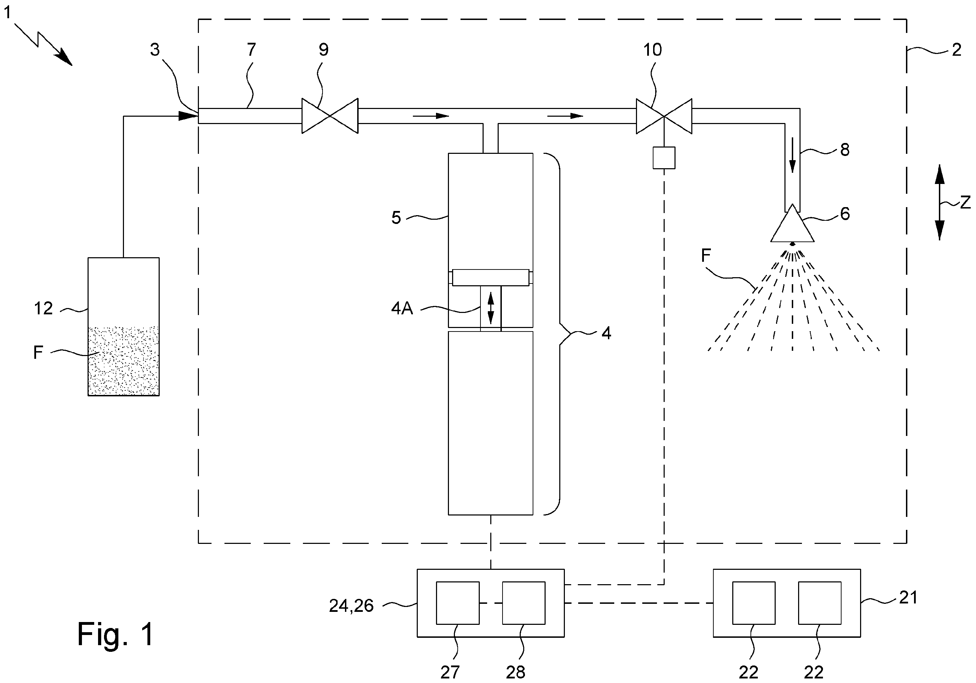

In the following, a preferred design of a spraying device 1 according to the invention is first explained, in particular with reference to Figs. 1 to 3.

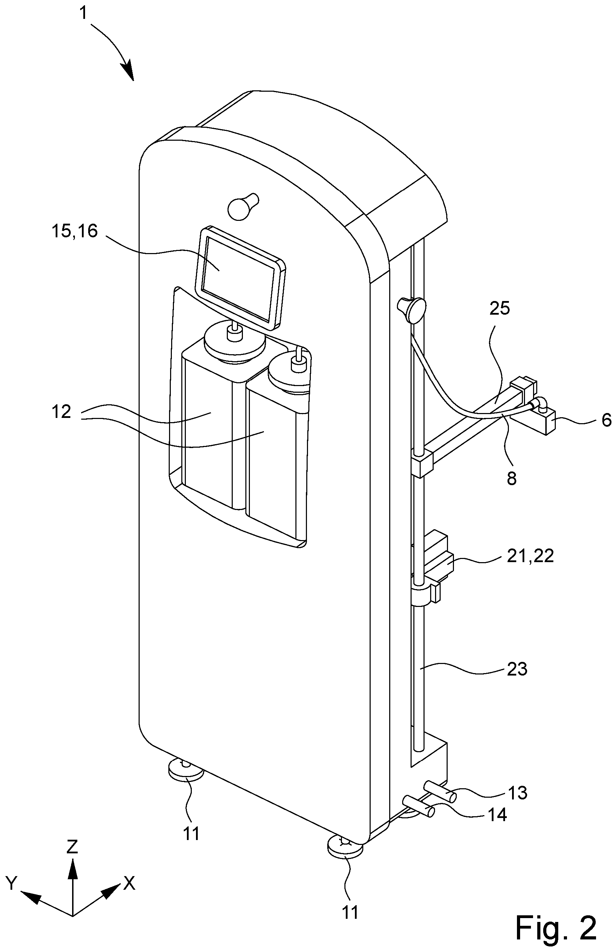

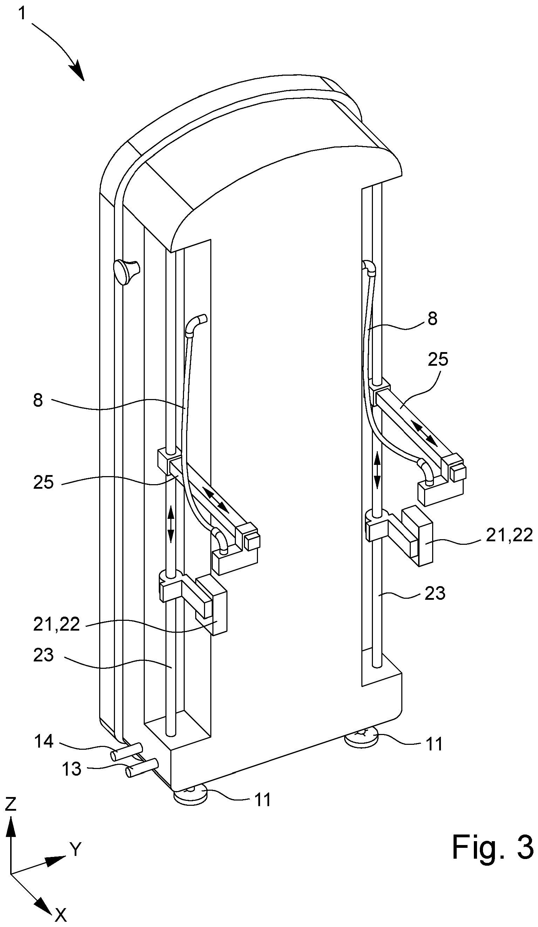

Fig. 1 shows a schematic drawing of a spraying device 1 according to the invention. In Figs. 2 and 3, exemplary perspective views of the spraying device 1 are shown.

The spraying device 1 is configured for spraying a fluid F. The fluid F is in particular a liquid vaccine solution.

The spraying device 1 is preferably designed for vaccination of animals by spray vaccination, in particular in a hatchery. In particular, the spraying device 1 is configured for vaccinating a plurality of animals at the same time by a single spray process performed with the spraying device 1. The animals to be vaccinated are preferably chickens or chicks, in particular one-day-old or few-days-old birds or chickens.

The spraying device 1 is preferably configured for generating a spray having droplets with a size enabling the spray or droplets to reach the eyes and/or the respiratory tract of the animals, in particular chickens or chicks, so that protection by vaccination of the animals is achieved.

The spraying device 1 has a spray unit 2. The spray unit 2 has an inlet 3 for supplying fluid to the spray unit 2, a pump 4 with a pump chamber 5, and a nozzle 6 for spraying the fluid F.

The inlet 3 is connected to the pump chamber 5 and the pump chamber 5 is connected to the nozzle 6 in such a way that fluid F can flow from the inlet 3 to the pump chamber 5 and from the pump chamber 5 to the nozzle 6. In particular, the inlet 3 is connected to the pump chamber 5 by a supply line 7, for example a pipe or a hose. Further, the pump chamber 5 is in particular connected to the nozzle 6 by a discharge line 8, for example a pipe or a hose.

The pump 4 is in particular a volumetric pump and/or a positive displacement pump, in particular a reciprocating pump, particularly preferably a piston pump or a plunger pump.

In particular, the pump 4 may have a displacement element 4A which is arranged and movable within the pump chamber 5, in particular so that the fluid F is sucked into the pump chamber 5, pressurized, and/or displaced from the pump chamber 5 by movement of the displacement element 4A. The displacement element 4A is preferably a plunger or a piston and/or is axially movable within the pump chamber 5, i.e. movable along a linear movement axis.

Preferably, the pump 4 comprises a pneumatic cylinder for moving the displacement element 4A. Therefore, the displacement element 4A can be driven or moved by pressurized gas or air.

The pump 4 is preferably configured to pressurize the fluid to a pressure between 2 bar and 6 bar, in particular between 3 bar and 4 bar, preferably by moving the displacement element 4A within the pump chamber 5.

In the pump 4, the fluid F is preferably in contact only with an inner wall of the pump chamber and the displacement element 4A. In particular, the fluid F has no contact with pressurized gas or air. This avoids pollution of the fluid F.

The spray unit 2 comprises an inlet valve 9 and an outlet valve 10. The inlet valve 9 is arranged between the inlet 3 and the pump chamber 5 and/or configured for controlling the flow of fluid F from the inlet 3 to the pump chamber 5. In particular, the supply line 7 may comprise the inlet valve 9. The outlet valve 10 is arranged between the pump chamber 5 and the nozzle 6. and/or configured for controlling the flow of fluid F from the pump chamber 5 to the nozzle 6. In particular, the discharge line 8 may comprise the outlet valve 10.

The outlet valve 10 is a controllable valve, in particular an electric valve or electrically controllable valve or pneumatic valve or pneumatically controllable valve. However, other types of controllable valves, for example hydraulic valves, are in principle also possible.

A particularly preferred example of an (electrically) controllable valve is a solenoid valve.

Preferably, the inlet valve 9 is a check valve and/are non-controllable valve and/or an automatically opening valve.

A controllable valve in the sense of the present invention is in particular a valve which may be controlled or operated, in particular opened and/or closed, by a control signal from a control device. The control signal may, for example, be an electric signal and/or a pneumatic signal. A controllable valve preferably has a part that is operatively connected or connectable to the external control device and adapted to receive the control signal and open and/or close the valve on the basis of the control signal. In particular, valves which automatically open and/or open at a certain fluid pressure, such as check valves, do not form controllable valves in the sense of the present invention but are non-controllable valves.

An electrically controllable valve is in particular a valve which is controllable, in particular openable and/or closable, by electric signals.

A pneumatically controllable valve is in particular a valve which is controllable, in particular openable and/or closable, by pneumatic signals.

A non-controllable valve in the sense of the present invention is in particular a valve which opens automatically and/or a valve which is not controllable by a control signal from a control device.

In particular, a check valve, i.e. a valve which allows fluid to flow only in one direction and which opens automatically at a certain fluid pressure, is a non-controllable valve in the sense of the present invention.

The inlet valve 9 and the outlet valve 10 are preferably independent and separate components. Preferably, the inlet valve 9 the outlet valve 10 are arranged at a distance from one another.

The inlet valve 9 and outlet valve 10 are preferably valves of different types.

The spraying device 1 is preferably a stand-alone device and/or a device designed to be put on the floor. In particular, the spraying device 1 comprises several feet 11, as shown by way of example in particular in Figs. 2 and 3. The feet 11 can be used to place the spraying device 1 on the floor. The feet 11 may be adjustable.

The spraying device 1 preferably has a height or vertical extension of at least 50 cm or at least 1 m. The spraying device 1 preferably has a horizontal extension, width and/or depth of at least 30 cm.

The terms "vertical" and "horizontal" as used herein preferably have their common meaning, i.e. a vertical direction is a direction (at least essentially) aligned with the direction of the force of gravity and a horizontal direction is (at least essentially) perpendicular to the vertical direction. In particular, a vertical position, direction, extension or movement is a position, direction, extension or movement along the Z axis shown in Figs. 1 to 4 and a horizontal direction, extension or movement is a position, direction, extension or movement within the plane spanned by the X and Y axis in Figs. 1 to 4.

The spraying device 1 preferably comprises one or more tanks 12 for receiving the fluid F to be sprayed. The tank 12 or tanks 12 is/are preferably connected or connectable to the spray unit 2, in particular the inlet 3, so that fluid F contained in the tank/tanks 12 can be supplied to the spray unit 2 and/or inlet 3. Each tank 12 preferably has a capacity of at least 1 I, more preferably between 2 I and 10 I.

The inlet 3 is not necessarily formed by a dedicated component of the spraying device 1 and/or spray unit 2. The inlet 3 may be formed by any section of the supply line 7, in particular an end of the supply line 7, arranged on the side of the inlet valve 9 opposite the pump 4 and/or upstream of the inlet valve 9, in particular when the spraying device 1 comprises a tank 12. For example, when the spraying device 1 comprises a tank 12, an end of the supply line 7 assigned and/or connected to the tank 12 may form the inlet 3.

Further, the spraying device 1 may comprise an air supply 13 for receiving pressurized gas or air and/or an electric supply 14 for connecting the spraying device 1 to an electric power source, in particular an electricity grid.

The spraying device 1 preferably has a display device 15 for visually displaying information, such as operation parameters of the spraying device 1 and/or warning messages or the like, and/or an input device 16 for receiving manual input from a user.

The display device 15 and the input device 16 may be integrated into a single component, in particular a touch screen.

The spraying device 1 is preferably configured to be placed or set up in the vicinity, in particular next to, a conveying device 17. The spraying device 1 and the conveying device 17 preferably together form a system 18 or part of a system 18.

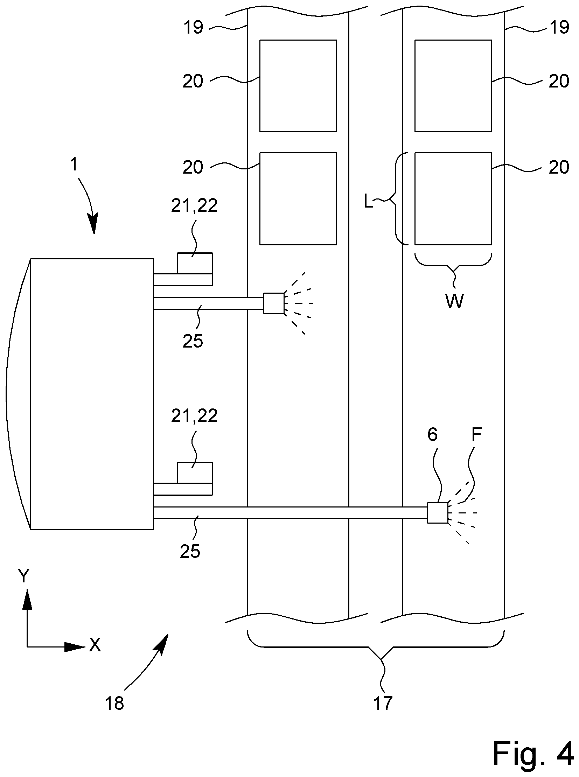

Fig. 4 shows a schematic depiction of the system 18 comprising the spraying device 1 and the conveying device 17.

The system 18 preferably constitutes an independent aspect of the present invention.

The conveying device 17 preferably comprises one or more conveyor lines 19 and/or conveyor belts. The conveyor lines 19 are preferably formed by conveyor belts.

The conveyor line(s) 19 is/are preferably straight at least in sections, in particular in a section next to the spraying device 1. Preferably, the conveyor lines run parallel at least in sections, in particular in a section next to the spraying device 1, as shown for example in Fig. 4.

The conveying speed of the conveying device 17 and/or conveyor line(s) 19 is preferably at least 0.1 m/s or more and/or at most 0.8 m/s or less, in particular between 0.25 m/s and 0.55 m/s.

The conveying device 17 is preferably configured for conveying or transporting boxes 20. When using the spraying device 1, conveying device 17 and/or system 18 for vaccinating animals, the animals are preferably placed in the boxes 20 and conveyed past the spraying device 1 with the conveying device 17. The spraying device 1 preferably generates a spray when a box 20 passes the spraying device 1, so that the spray reaches the animals contained in the box 20 and thus the animals are vaccinated.

The boxes 20 preferably have a width W and/or length L of at least 30 cm or more and/or at most 100 cm or less. The boxes 20 preferably have a rectangular or quadratic base area.

In particular, the size of the boxes 20 is between 40 cm x 40 cm and 80 cm x 80 cm.

Preferably, all boxes 20 used in connection with the system 18, spraying device 1 and/or conveying device 17, have the same sizes. It is preferred that at a certain location, for example in a certain hatchery, boxes 20 of the same size are used, whereas the boxes 20 used at different locations or in different hatcheries may have different sizes.

The spraying device 1 preferably comprises a sensor device 21. The sensor device 21 is preferably configured for detecting boxes 20, in particular boxes 20 being conveyed past the spraying device 1 and/or the sensor device 21, in particular with the conveying device 17.

The sensor device 21 preferably comprises at least one sensor 22. The sensor 22 is preferably an optical sensor, in particular an infrared sensor and/or a photoelectric sensor.

The position, in particular vertical position, of the sensor 22 is preferably adjustable, as in particular indicated by respective arrows in Fig. 3. In particular, the sensor 22 can be movably mounted to an at least essentially vertically extending rail 23 of the spraying device 1 so that the (vertical) position of the sensor 22 may be changed. This allows adapting the spraying device 1 or sensor device 21 to different conveying devices 17, in particular conveying devices 17 with different heights of the conveyor belts.

Preferably, the sensor device 21 comprises two or more sensors 22. The previous explanations regarding the sensor 22 preferably apply to all sensors 22.

The spraying device 1 preferably comprises a control device 24. The control device 24 is operatively connected to the sensor device 21 and the outlet valve 10. Preferably, the control device 24 is in addition operatively connected to the pump 4.

In particular, the control device 24 is configured to control, in particular open and/or close, the outlet valve 10 on the basis of sensor signals received from the sensor device 21. Preferably, the control device 24 is further configured to control the pump 4.

The control device 24 is preferably configured to send control signals to the outlet valve 10. The outlet valve 10 is preferably controllable, in particular openable and/or closable, by control signals generated by and/or received from the control device 24. The control signals are preferably electric signals. In the case of a pneumatically controllable outlet valve 10, the electric control signals generated by the control device 24 are preferably converted to pneumatic control signals before or in the outlet valve 10.

Particularly preferably, the control device 24 controls or is configured to control the outlet valve 10 and preferably the pump 4 in such a way that the fluid F pressurized by the pump 4, in particular in the pump chamber 5, has already reached a desired working pressure at the time of opening the outlet valve 10. Thereby a constant droplet size and uniform distribution of the generated spray over the whole spray process can be ensured. In particular, the droplets have the desired size already at the very beginning of a spray process.

For example, the desired working pressure can be ensured by measuring it or by a minimum delay between activation of the pump 4 and controlling of the outlet valve 10 to open in order to start the spraying.

The desired working pressure may be between 2 bar and 5 bar, in particular between 3 bar and 4 bar.

The control device 24 can be configured to synchronize control of the outlet valve 10 with a position one or more of boxes 20 under the further condition that the working pressure is reached. The control device 24 can control the pump 4 to start with a predetermined time span in advance of controlling the outlet valve 10 to open for starting the spraying. Alternatively or additionally, the pressure of the fluid can be measured and it can be verified in advance of controlling the outlet valve 10 to open for starting the spraying that the measured pressure reaches the working pressure.

The nozzle 6 is preferably a flat fan nozzle. A flat fan nozzle is in particular a nozzle 6 configured to generate a flat spray or a spray with a spray pattern appearing at least essentially as a flat sheet of liquid and/or extending at least essentially in a plane.

The nozzle 6 is preferably configured for operation at a volumetric flow rate of at least 0.2 l/min or more and/or at most 1 l/min or less. In particular, the nozzle 6 is configured for operation at a volumetric flow rate between 0.25 l/min and 0.95 I/min.

Further, the nozzle 6 is preferably configured for operation at a pressure of at least 2 bar or more and/or at most 5 bar or less. In particular, the nozzle 6 is configured for operation at a pressure between 3 bar and 4 bar.

Preferred examples for nozzles 6 are:
- a nozzle 6 configured for operation at a volumetric flow rate of 0.27 l/min and at a pressure of 3 bar;
- a nozzle 6 configured for operation at a volumetric flow rate of 0.45 l/min and at a pressure of 4 bar;
- a nozzle 6 configured for operation at a volumetric flow rate of 0.68 I/min and at a pressure of 4 bar;
- a nozzle 6 configured for operation at a volumetric flow rate of 0.91 I/min and at a pressure of 4 bar.

The nozzle 6 is preferably exchangeable. In particular, the nozzle 6 may be manually exchangeable by a user.

The nozzle 6 is preferably configured and/or arranged to spray the fluid F in an essentially vertical and/or downwards direction and/or to spray the fluid F towards or onto conveying device 17 and/or the boxes 20 from the top.

The nozzle 6 is preferably arranged or arrangeable above the conveying device 17, in particular the conveyor line 19, and/or the boxes 20.

The position P, in particular vertical position, of the nozzle 6 is preferably adjustable, as in particular indicated by respective arrows in Fig. 3. In particular, the nozzle 6 is (directly or indirectly) movably mounted to an at least essentially vertically extending rail 23 of the spraying device 1 so that the (vertical) position P of the nozzle 6 may be changed. This allows adapting the spraying device 1 or nozzle 6 to different conveying devices 17, in particular conveying devices 17 with different heights of the conveyor belts, and/or different boxes 20.

As an alternative or in addition, the horizontal position P of the nozzle 6 is preferably adjustable, as in particular indicated by respective arrows in Fig. 3. In particular, the nozzle 6 is movably mounted to an at least essentially horizontally extending rail 23 of the spraying device 1 so that the (horizontal) position P of the nozzle 6 may be changed. This allows adapting the spraying device 1 or nozzle 6 to different conveying devices 17 and/or box sizes.

Therefore, preferably, the spraying device 1 comprises at least one essentially vertical rail 23 and/or at least one essentially horizontal rail 25. The sensor device 21 or sensor 22 thereof is preferably movably mounted to the vertical rail 23. The nozzle 6 is preferably movably mounted to the horizontal rail 25, in particular wherein the horizontal rail 25 is movably mounted to the vertical rail 23, in particular so that the horizontal position of the nozzle 6 is changeable by moving the nozzle 6 along the horizontal rail 25 and the vertical position of the nozzle 6 is changeable by moving the horizontal rail 25 along the vertical rail 23.

The spraying device 1, in particular the spray unit 2, preferably has several nozzles 6, in particular exactly two nozzles 6. The two nozzles 6 can preferably be operated simultaneously. The two nozzles 6 may be nozzles 6 of the same type. The previous explanations regarding the nozzle 6 preferably apply to all nozzles 6.

Preferably, the spraying device 1 has two vertical rails 23, two sensors 21 and two nozzles 6, wherein one sensor 21 is movably mounted to each vertical rail 23 and wherein one nozzle 6 is movably mounted to each vertical rail 23. Further, the spraying device 1 preferably has two horizontal rails 25, wherein one nozzle 6 is movably mounted to each horizontal rail 25 and one horizontal rail 23 is mounted to each vertical rail 23, so that the nozzles 6 are (indirectly) movably mounted to the vertical rails 23 by the horizontal rails 25. This embodiment is in particular shown in Fig. 3.

According to one aspect, the spraying device 1 or spray unit 2 may have two nozzles 6 and the spraying device 1 or spray unit 2 may be configured to spray the same fluid F with the two nozzles 6. In this case, the nozzles 6 may be connected with the same pump 4 and/or discharge line 8. However, it is also possible that the spraying device 1 has two pumps 4 and/or two discharge lines 8, each of the pumps 4 and/or discharge lines 8 being connected to one of the nozzles 6. According to this aspect, the spraying device 1 or spray unit 2 may be configured to spray the fluid F towards the same conveyor line 19 or the spraying device 1 or spray unit 2 may be configured to spray the fluid F towards different conveyor lines 19. Further, the nozzles 6 may be assigned to and/or arranged above the same conveyor line 19 or different conveyor lines 19.

According to another aspect, the spraying device 1 or spray unit 2 may have two nozzles 6 and the spraying device 1 or spray unit 2 may be configured to spray different fluids F with the two nozzles 6. In this case, the spraying device 1 may have two pumps 4, two separate discharge lines 8 and preferably two tanks 12, wherein one nozzle 6 is connected with each pump 4 and/or discharge line 8. According to this aspect, the spraying device 1 or spray unit 2 may be configured to spray the different fluids F towards the same conveyor line 19 or the spraying device 1 or spray unit 2 may be configured to spray the different fluids F towards different conveyor lines 19. Further, the nozzles 6 may be assigned to and/or arranged above the same conveyor line 19 or the nozzles 6 may be assigned to and/or arranged above different conveyor lines 19.

It may also be possible to change a mode of operation of the spraying device 1 or spray unit 2 so that different operation modes correspond to different of the above-mentioned aspects. In particular, when the spraying device 1 has two tanks 12, two pumps 4 and two nozzles 6, wherein the tanks 12, pumps 4 and nozzles 6 form to fluidically separate systems, each system comprising one tank 12, one pump 4 connected to the tank 12 and one nozzle 6 connected to the pump 4, the mode of operation may be changed by filling either the same fluid F in the different tanks 12 or by filling different fluids F in the different tanks 12. Further, the mode of operation may be changed, as an alternative or in addition, by adjusting the position of the nozzles 6, so that the nozzles 6 are either assigned to and/or arranged above the same conveyor line 19 or are assigned to and/or arranged above different conveyor lines 19.

The spraying device 1 preferably has a data processing unit 26, the data processing unit 26 preferably comprising a processor 27 and/or a memory 28 coupled with the processor 27. The control device 24 preferably comprises or is formed by the data processing unit 26. The data processing unit 26 and/or control device 24 is/are preferably coupled with the display device 15 and/or the input device 16.

According to another aspect, the present invention also relates to a method for spraying the fluid F. The method preferably uses the spraying device 1 and/or the system 18 as described herein for spraying the fluid F.

The method in particular comprises controlling, in particular by the control device 24, the pump 4 and the outlet valve 10 in such a way that the fluid F has already reached a desired working pressure at the time of opening the outlet valve 10.

The method may comprise spraying, with different nozzles 6, the same fluid F, in particular towards or onto the same conveyor line 19.

Further, as an alternative or in addition, the method may comprise spraying, with different nozzles 6, the same fluid F towards or onto different conveyor lines 19.

Further, as an alternative or in addition, the method may comprise spraying, with different nozzles 6, different fluids F, in particular towards or onto the same conveyor line 19.

Further, as an alternative or in addition, the method may comprise spraying, with different nozzles 6, different fluids F towards or onto different conveyor lines 19.

### Method for the installation of a spraying device

In the foregoing, a preferred embodiment of a spraying device 1 according to the present invention has been predominantly described. In the following, another aspect of the present invention will be dealt with primarily.

According to another aspect, which may be implemented independently but may also be combined with the above-explained features regarding the spraying device 1 and/or system 18, the present invention relates to a method for the installation of a spraying device 1.

In the method for the installation of a spraying device 1, the spraying device 1 is configured for spraying a fluid F, in particular a liquid vaccine solution, towards boxes 20 being conveyed past the spraying device 1, the boxes 20 preferably containing animals, in particular chickens or chicks, to be vaccinated by spray vaccination. Preferably, but not necessarily, the spraying device 1 is configured as described in the foregoing. Therefore, the above explanations in connection with the spraying device 1, conveying device 17 and/or system 18 preferably also apply for the method for the installation of the spraying device 1. In principle, however, the spraying device 1 may be any spraying device which is suitable for the explained purpose of spraying a fluid F towards boxes 20 being conveyed past the spraying device 1.

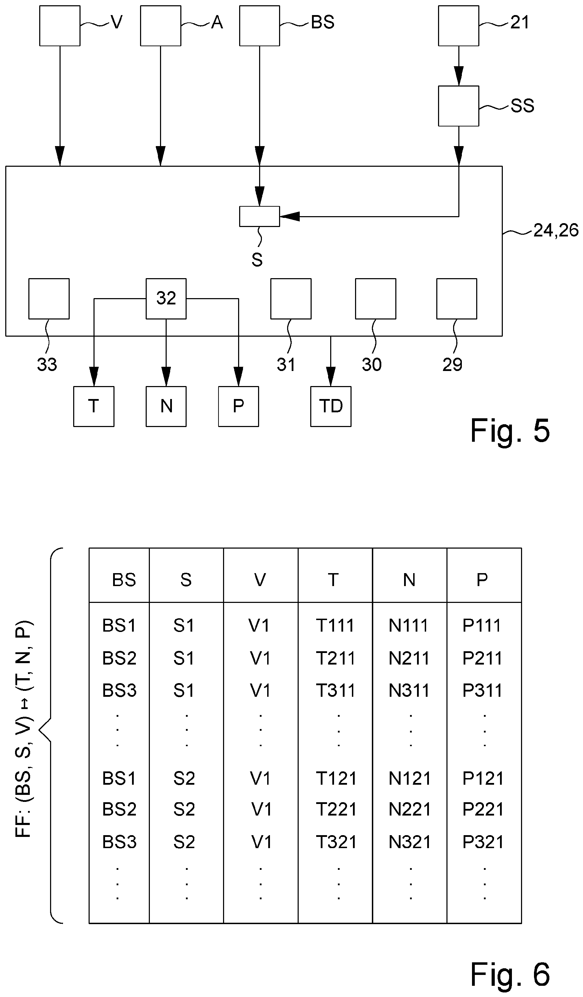

The method for the installation of the spraying device 1 is schematically depicted as a block diagram in Fig. 5.

The method for the installation of the spraying device 1 comprises the following steps, in particular in the following order:
- receiving sensor signals SS in a sensor device 21 for detecting boxes 20 being conveyed past the spraying device 1, preferably wherein the spraying device 1 comprises the sensor device 21 or the sensor device 21 is part of the spraying device 1 and/or the boxes 20 are conveyed with the conveying device 17,
- receiving box size data BS, the box size data BS representing a size of the boxes 20, for example a width W and/or length L and/or base area of the boxes 20,
- automatically determining, in particular using the control device 24 and/or data processing unit 26, based on the box size data BS and the sensor signals SS, the speed S of the boxes 20 being conveyed past the spraying device 1, and
- automatically determining, in particular using the control device 24 and/or data processing unit 26, a type T and/or number N of nozzles 6 to be used for spraying the fluid F and/or an, in particular vertical, nozzle position P to be set.

The above method steps may in principle also be performed in a different order and/or at least partly simultaneously.

The above method steps are performed in particular with the spraying device 1, in particular with the control device 24 and/or data processing unit 26.

The determined speed S of the boxes 20 is preferably an average speed of the boxes 20 detected with the sensor device 21.

The control device 24 and/or data processing unit 26 may have a box speed determination module 29 for determining, in particular computing, the box speed S based on the sensor signals SS received in the sensor device 21 and outputting box speed S.

The boxes 20 are preferably all the same size.

The nozzle position P may be a vertical and/or horizontal position.

The nozzle position P is in particular a (vertical) distance between the nozzle 6 and the conveying device 17, conveyor line 19 and/or boxes 20 conveyed thereby. However, the nozzle position P may also be a position of the nozzle defined relative to the floor or relative to spraying device 1. For example, the spraying device 1 may have one or more scales or other markings, in particular associated the vertical rail 23 and/or horizontal rail 25, and the nozzle position P may be a position defined in relation thereto.

The method may further comprise receiving fluid volume data V. The fluid volume data V may represent a fluid volume to be sprayed towards or onto a single box 20. As an alternative or in addition, the fluid volume data V may represent a fluid volume to be sprayed in a single spray process. Thus, in other words, the fluid volume represented by the fluid volume data V is preferably a fluid volume that is intended to be applied to each box 20 and/or to the animals contained in each box 20, in particular in a single spray process performed with the spraying device 1.

The box size data BS and/or the fluid volume data V may be received by manual user input and/or via the input device 16, in particular the touch screen. In particular, the method may comprise displaying one or more fields for entering a box size and/or a (desired) fluid volume to be sprayed in a single spray process performed with the spraying device 1. The one or more fields is/are preferably displayed with an electronic display device, in particular the display device 15, which is in particular a touchscreen. Further, the method preferably comprises receiving, with said electronic display device, box size data BS and/or fluid volume data V based on the entered box size and/or fluid volume in the respective fields.

However, the box size or box size data BS may also be received in another way than by manual user input. In particular, the box size or box size data BS may be automatically determined on the basis of the sensor signals SS received in the sensor device 21, in particular using the control device 24 and/or data processing unit 26.

The control device 24 and/or data processing unit 26 may have a box size determination module 30 for determining, in particular computing, the box size based on the sensor signals SS received in the sensor device 21 and outputting box size data BS corresponding to the determined box size. The box size determination module 30 may have or be formed by a machine learning model which has been trained and/or is configured for determining the box size.

Further, the fluid volume data V may also be received in another way than by manual user input. In particular, the fluid volume or fluid volume data V may be automatically determined on the basis of the sensor signals SS received in the sensor device 21 and/or the box size data BS, in particular using the control device 24 and/or data processing unit 26.

The control device 24 and/or data processing unit 26 may have a fluid volume determination module 31 for determining, in particular computing, the fluid volume based on the sensor signals SS received in the sensor device 21 and/or the box size data BS and outputting fluid volume data V corresponding to the determined fluid volume. The fluid volume determination module 31 may have or be formed by a machine learning model which has been trained and/or is configured for determining the fluid volume.

A "machine learning model" in the sense of the present disclosure preferably comprises and/or uses a machine learning algorithm and one or more (training) datasets. In other words, a machine learning model is preferably the output of a machine learning algorithm run on one or more (training) datasets. In particular, a machine learning model represents what was learned by a machine learning algorithm. An algorithm is in particular a procedure that is run on one or more (training) datasets to create the machine learning model. The algorithm may in particular be an artificial neural network, particular preferably a graph neural network.

A "training dataset" in the sense of the present disclosure is preferably a set of data that is used to train the machine learning model and/or machine learning algorithm.

An "artificial neural network" in the sense of the present disclosure is preferably a computational learning system that uses a network of functions to understand and translate a data input of one form into a desired output, usually in another form. A neural network is composed of at least two, preferably three or more layers. In particular, an artificial neural network has an input layer, an output layer and one or more hidden layers, i.e. layers between the input layer and the output layer. Each layer has one or more units called "neurons". The concept of artificial neural networks is inspired by the brain and the way a brain learns.

The type T and/or number N of nozzles 6 to be used and/or the nozzle position P to be set is preferably determined based on or taking into account the determined speed S of the boxes 20 and/or the fluid volume data V.

The determined type T of nozzles 6, number N of nozzles 6 and/or nozzle position P is/are preferably determined with an electronic display device, in particular the aforementioned electronic display device which also displays the fields for entering box size and/or fluid volume, particularly preferably the aforementioned display device 15.

Preferably, the type T and/or number N of nozzles 6 to be used are selected from a predetermined set of available nozzles 6.

The predetermined set of nozzles 6 preferably comprises one or more flat fan nozzles, in particular only flat fan nozzles.

The nozzles 6 of the predetermined set of available nozzles 6 are preferably configured for operation at a volumetric flow rate of at least 0.2 l/min or more and/or at most 1 l/min or less. In particular, the nozzles 6 of the predetermined set of available nozzles 6 are configured for operation at a volumetric flow rate between 0.25 l/min and 0.95 I/min.

Further, the nozzles 6 of the predetermined set of available nozzles 6 are preferably configured for operation at a pressure of at least 2 bar or more and/or at most 5 bar or less. In particular, the nozzles 6 of the predetermined set of available nozzles 6 are configured for operation at a pressure between 3 bar and 4 bar.

The predetermined set of nozzles 6 may in particular comprise one or more of the following:
- at least one or two nozzles 6 configured for operation at a volumetric flow rate of 0.27 l/min and at a pressure of 3 bar;
- at least one or two nozzles 6 configured for operation at a volumetric flow rate of 0.45 l/min and at a pressure of 4 bar;
- at least one or two nozzles 6 configured for operation at a volumetric flow rate of 0.68 l/min and at a pressure of 4 bar;
- at least one or two nozzles 6 configured for operation at a volumetric flow rate of 0.91 l/min and at a pressure of 4 bar.

The type T of nozzles 6, number N of nozzles 6 and/or nozzle position P are preferably determined with a function FF assigning different values representing box sizes, box speeds S and/or fluid volumes to different values representing said type T of nozzles 6, number N of nozzles 6 and/or nozzle position P. In other words, the function FF describes the dependency of the type T of nozzles 6, number N of nozzles 6 and/or nozzle position P on the representing box sizes, box speeds S and/or fluid volumes.

The function FF is shown by way of example in Fig. 6.

The function FF may be a multidimensional function.

The function FF is in particular a discrete function, i.e. a function that assigns a box size, box speed S and/or fluid volume to each discrete or countable number of values of type nozzle type T, nozzle number N and/or nozzle position P.

For example, the function FF may be present in the form of the table or look-up table, as shown in Fig. 6. However, the function FF may also be present in any other form, for example as diagram, a functional equation or another mapping rule.

The function FF is preferably saved or present in the controller device 24 and/or the data processing unit 26, in particular the memory 27 thereof.

Preferably, the function FF is empirically determined and/or has been empirically determined prior to installation of the spraying device 1.

In particular, the function FF is or has been determined prior to installation of the spraying device 1 by carrying out a series of tests analyzing the relationship between box size, box speed S and/or fluid volume on the one hand and the type T and/or number N of nozzles 6 and/or the nozzle position P on the other hand.

In the tests, the box sizes, box speeds S and/or fluid volumes and preferably varied. Further, it is preferably determined, in particular by a technician or user, which nozzle type T, nozzle number N and/or nozzle position P is/are needed or suitable for a certain box size, box speed and/or fluid volume. The results of these tests are preferably saved or documented, in particular in form of the function FF.

The tests are preferably carried out only once. The resulting function FF can then preferably be used repeatedly or frequently, in particular for the installation of different spraying devices 1 at different locations or in connection with different conveying devices 17.

The control device 24 and/or data processing unit 26 may have a nozzle determination module 32 for determining, in particular computing, the nozzle type T, nozzle number N and/or nozzle position P based on the box size data BS, box speeds S and/or fluid volume data V and outputting the determined nozzle type T, nozzle number N and/or nozzle position P.

The nozzle determination module 32 may comprise the function FF and/or may determine or be configured to determine the nozzle type T, nozzle number N and/or nozzle position P based on or using the function FF.

However, instead of using the function FF, the method may also comprise determining the nozzle type T, nozzle number N and/or nozzle position P by a machine learning model which has been trained and/or is configured for determining the nozzle type T, nozzle number N and/or nozzle position P. Thus, in particular, the nozzle determination module 32 may have or be formed by a machine learning model which has been trained and/or is configured for determining the nozzle type T, nozzle number N and/or nozzle position P.

The method for the installation of the spraying device 1 may comprise automatically determining a time delay TD between detection of the box 20 with the sensor device 21 and performing a spray process in which fluid F is sprayed towards or onto the box 20. In other words, the time point for spraying the fluid F towards or onto the box 20 is automatically determined.

In particular, the time delay TD may depend on the nozzle type T, nozzle number N, nozzle position P and/or the box speed S.

Further, the method may comprise receiving adjustment data A representing a desired adjustment of a fluid volume to be sprayed in single spray process and adjusting the set fluid volume based on the adjustment data. Adjusting the fluid volume is preferably performed by adjusting or changing one or more operational parameters of the spraying device 1 associated with the sprayed fluid volume, for example a time for which the outlet valve 10 is opened for/during a single spray process, a pressure of the fluid and/or a distance travelled by the displacement element 4A of the pump 4 for/during a single spray process.

An adjustment of the fluid volume may be necessary when the set fluid volume does not match the actually sprayed fluid volume. Such a mismatch may be determined manually or automatically.

For example, the mismatch may be determined by comparing the fluid volume data V or set fluid volume with the actually sprayed fluid volume, in particular by (manually, automatically or partly automatically) measuring the actually sprayed fluid volume, for example by capturing the fluid F sprayed in a single spray process, determining the volume of the captured fluid F and comparing the captured volume with the set fluid volume or fluid volume data V.

An automatic determination of the sprayed fluid volume may be carried out, for example, by detecting the positions and/or movements of the displacement element 4A, in particular piston or plunger, of the pump 4 and inferring the sprayed fluid volume from the detected positions and/or movements.

The adjustment data A may be received may manual user input and/or via the input device 16, in particular the touch screen. In particular, the method comprises displaying with an electronic display device, particularly the aforementioned electronic display device which also displays the fields for entering box size and/or fluid volume, at least one field for entering the adjustment data and receiving with the electronic display device adjustment data A entered in the at least one field.

Nevertheless, in particular in the case of automatically comparing the set fluid volume with the actually sprayed fluid volume, the adjustment data A may in principle also be received by determining them automatically, in particular with the data processing unit 26 and/or control device 24. For example, the control device 24 and/or data processing unit 26 may have an adjustment module 33 for comparing, in particular computing, adjustment data A based on a comparison of the set fluid volume or the fluid volume data V and the actually sprayed fluid volume and outputting the determined adjustment data. The adjustment module 33 may have or be formed by a machine learning model which has been trained and/or is configured for determining the adjustment data A.

Further, the method may comprise receiving sensor signals SS in a sensor device 21 with different sensors 22, wherein the different sensors 22 detect boxes 20 being conveyed on different conveyor lines 19. The nozzle types T, nozzle numbers N and/or nozzle positions P are preferably determined separately for different nozzles 6 assigned to the different conveyor lines 19. Thus, the nozzle types T, nozzle numbers N and/or nozzle positions P may be different for different conveyor lines 19.

In the method for installation of the spraying device 1, the spraying device 1 is preferably placed in the vicinity, in particular (directly) next to, a conveying device 17, so that the spraying device 1 can spray fluid F towards or onto the conveying device 17 or boxes 20 being conveyed by the conveying device 17.

Further, boxes 20 are preferably placed on the conveying device 17 or conveyor line(s) 19.

The conveying device 17 is preferably put into operation, so that the boxes 20 are conveyed with the conveying device 17.

The boxes 20 are preferably conveyed past the spraying device 1 with the conveying device 17. Then,

The boxes 20 which are conveyed past the conveying device 17 are preferably detected with the sensor device 21, in particular the one or more sensors 22.

Further, nozzles 6 corresponding to the determined nozzle type T and/or nozzle number N are installed in the spraying device 1, in particular in the determined nozzle position P. The installation of the nozzles 6 is preferably performed manually by a user or technician. However, in principle, the installation of nozzles 6 may also be performed automatically and/or by the spraying device 1.

The spraying device 1 preferably has means adapted to execute the steps of the method for the installation of the spraying device 1. Said means preferably comprise or are formed by the control device 24, data processing unit 26, processor 27, memory 28, and/or one or more of the modules 29 to 33.

In a further aspect, the present invention relates to a computer program or computer program product comprising instructions to cause the spraying device 1 described herein to execute the steps of the method for the installation of the spraying device 1 described herein.

In a further aspect, the present invention relates to a computer-readable storage medium having stored thereon said computer program or computer program product.

To summarize, the spraying device 1 is preferably installed as follows: A technician places the spraying device 1 next to the conveying device 17. The box size is entered via the display device 15 and/or input device 16. The spraying device 1 then instructs the technician to place (empty) boxes 20 on the conveying device 17 and to turn on the conveying device. Then, the sensor device 22 detects the boxes 20 and determines the box speed S. Further, the technician enters the desired fluid volume to be sprayed. The spraying device 1 displays, in particular with the display device 16, the type T and/or number N of nozzles 6 to be installed and/or the nozzle position P at which the nozzle/s 6 is/are to be installed. The technician installs the nozzle 6 or nozzles accordingly.

Further aspects of the present invention, which may be combined with the aforementioned aspects and features, but may also be implemented independently, are in particular:
1. Spraying device 1 for spraying a fluid F, in particular a liquid vaccine solution, the spraying device 1 having a spray unit 2,
   the spray unit 2 having an inlet 3 through which the fluid F can be supplied to the spray unit 2, a pump 4 with a pump chamber 5, and a nozzle 6 for spraying the fluid F,
   wherein the inlet 3 is connected to the pump chamber 5 and the pump chamber 5 is connected to the nozzle 6, so that fluid F can flow from the inlet 3 to the pump chamber 5 and from the pump chamber 5 to the nozzle 6,
   **characterized** in that the spray unit 2 comprises an inlet valve 9 arranged between the inlet 3 and the pump chamber 5 and an outlet valve 10 arranged between the pump chamber 5 and the nozzle 6, wherein the outlet valve 10 is a controllable valve.
2. Spraying device according to aspect 1, characterized in that the outlet valve 10 is an electrically controllable valve or a pneumatically controllable valve.
3. Spraying device according to aspect 1 or 2, characterized in that the inlet valve 9 is a check valve and/or a non-controllable valve and/or an automatically opening valve.
4. Spraying device according to one of the preceding aspects, characterized in that the inlet valve 9 and the outlet valve 10 are independent and separate components and/or in that the inlet valve 9 and the outlet valve 10 are valves of different types.
5. Spraying device according to one of the preceding aspects, characterized in that the pump 4 is a volumetric pump and/or a positive displacement pump, in particular a piston pump or a plunger pump.
6. Spraying device according to one of the preceding aspects, characterized in that the spraying device 1 has a sensor device 21 and a control device 24 operatively connected with the sensor device 21 and the outlet valve 10, the control device 24 being configured to control the outlet valve 10 and preferably the pump 4 based on signals received from the sensor device 21, in particular in such a way that the fluid F has already reached a desired working pressure at the time of opening the outlet valve 10.
7. Spraying device according to aspect 6, characterized in that the sensor device 21 has at least one sensor 22 for detecting boxes 20 being conveyed past the spraying device 1, the at least one sensor 22 preferably being an optical sensor, in particular an infrared sensor and/or a photoelectric sensor.
8. Spraying device according to one of the preceding aspects, characterized in that the nozzle 6 is a flat fan nozzle.
9. Spraying device according to one of the preceding aspects, characterized in that the nozzle 6 is configured for operation at a volumetric flow rate of at least 0.2 l/min or more and/or at most 1 l/min or less at a pressure of at least 2 bar or more and/or at most 5 bar or less.
10. Spraying device according to one of the preceding aspects, characterized in that the nozzle 6 is exchangeable and/or the spray unit 2 has several nozzles 6, in particular wherein the spray unit 2 is configured for spraying different fluids F through different of the several nozzles 6.
11. Spraying device according to one of the preceding aspects, characterized in that the spraying device 1 is configured to be placed in the vicinity of a conveying device 17, the conveying device 17 in particular having a conveyor belt, wherein the conveying device 17 is configured to transport boxes 20 containing animals, in particular chickens or chicks, to be vaccinated by spray vaccination, and the spraying device 1 is configured to spray the fluid F towards the conveying device 17 and/or boxes 20, in particular from the top.
12. Spraying device according to aspect 11, characterized in that the spraying device 1 is configured to simultaneously spray fluid F towards different conveyor lines 19, in particular conveyor belts, of the conveying device 17, preferably by having distinct nozzles 6 assigned to the different conveyor lines 19.
13. Spraying device according to aspect 12, characterized in that the spraying device 1 is configured to spray different fluids F towards the different conveyor lines (19 or is configured to spray the same fluid (F towards the different conveyor lines (19.
14. Spraying device according to one of the preceding aspects, characterized in that the spraying device 1 has a sensor device 21 for detecting boxes 20 being conveyed past the spraying device 1 and means adapted to execute the steps of a method for the installation of the spraying device 1, the method comprising:
   - receiving sensor signals in the sensor device 21,
   - receiving box size data, the box size data representing a size of the boxes 20,
   - automatically determining, based on the box size data and the sensor signals, the speed of the boxes 20 being conveyed past the spraying device 1, and
   - automatically determining a type and/or number of nozzles 6 to be used for spraying the fluid F and/or an, in particular vertical, nozzle position to be set.
15. System 18 for spraying a fluid F, in particular a liquid vaccine solution, comprising a conveying device 17 and a spraying device 1, the conveying device 17 in particular having a conveyor belt, wherein the conveying device 17 is configured to transport boxes 20 containing animals, in particular chickens or chicks, to be vaccinated by spray vaccination, and wherein the spraying device 1 is configured to spray the fluid F towards the conveying device 17 and/or boxes 20, in particular from the top,
   **characterized**
   in that the spraying device 1 is configured according to one of the preceding aspects.
16. Method for spraying a fluid F, in particular a liquid vaccine solution, wherein a spraying device 1 according to one of aspects 1 to 14 and/or a system 18 according aspect 15 is used for spraying the fluid F, in particular wherein the pump 4 and outlet valve 10 are controlled in such a way that the fluid F has already reached a desired working pressure at the time of opening the outlet valve 10. Individual aspects in features of the present invention may be implemented independently from one another, but also in any desired combination and/or order.

**List of reference symbols:**

| | | | |
|---|---|---|---|
| 1 | Spraying device | 26 | Data processing unit |
| 2 | Spray unit | 27 | Processor |
| 3 | Inlet | 28 | Memory |
| 4 | Pump | 29 | Box speed determination module |
| 4A | Displacement element | 30 | Box size determination module |
| 5 | Pump chamber | 31 | Fluid volume determination module |
| 6 | Nozzle | | |
| 7 | Supply line | 32 | Nozzle determination module |
| 8 | Discharge line | 33 | Adjustment module |
| 9 | Inlet valve | | |
| 10 | Outlet valve | A | Adjustment data |
| 11 | Feet | BS | Box size data |
| 12 | Tank | F | Fluid |
| 13 | Air supply | L | Length of 20 |
| 14 | Electric supply | N | Number of nozzles |
| 15 | Display device | P | Nozzle position |
| 16 | Input device | S | Box speed data |
| 17 | Conveying device | SS | Sensor signals |
| 18 | System | T | Type of nozzle |
| 19 | Conveyor line | TD | Time delay |
| 20 | Box | V | Fluid volume data |
| 21 | Sensor device | W | Width of 20 |
| 22 | Sensor | X | Axis |
| 23 | (Vertical) Rail | Y | Axis |
| 24 | Control device | Z | Axis |
| 25 | (Horizontal) Rail | | |

## Claims

1. Method for the installation of a spraying device (1) for spraying a fluid (F), in particular a liquid vaccine solution, towards boxes (20) being conveyed past the spraying device (1), the boxes (20) preferably containing animals, in particular chickens or chicks, to be vaccinated by spray vaccination, the method comprising:
- receiving sensor signals (SS) in a sensor device (21) for detecting boxes (20) being conveyed past the spraying device (1),
- receiving box size data (BS), the box size data (BS) representing a size of the boxes (20),
- automatically determining, based on the box size data (BS) and the sensor signals (SS), the speed (S) of the boxes (20) being conveyed past the spraying device (1), and
- automatically determining a type (T) and/or number (N) of nozzles (6) to be used for spraying the fluid (F) and/or an, in particular vertical, nozzle position (P) to be set.

2. Method according to claim 1, further comprising receiving fluid volume data, the fluid volume data (V) representing a fluid volume to be sprayed towards a box (20) and/or in a single spray process.

3. Method according to claim 1 or 2, further comprising displaying, with an electronic display device, one or more fields for entering a box size and/or a fluid volume, and receiving, with the electronic display device, box size data (BS) and/or fluid volume data (V) entered in the respective fields.

4. Method according to one of the preceding claims, further comprising displaying said type (T) and/or number (N) of nozzles (6) and/or said nozzle position (P) with an electronic display device.

5. Method according to one of the preceding claims, further comprising selecting the type (T) and/or number (N) of nozzles (6) from a predetermined set of available nozzles (6).

6. Method according to one of the preceding claims, further comprising determining the type (T) and/or number (N) of nozzles (6) and/or the nozzle position (P) with a function (FF) assigning different values representing box sizes, box speeds (S) and/or fluid volumes to different values representing said type (T) and/or number (N) of nozzles (6) and/or said nozzle position (P).

7. Method according to claim 6, further comprising determining said function (FF) prior to installation of the spraying device (1) by carrying out a series of tests analyzing the relationship between box size, box speed (S) and/or fluid volume on the one hand and the type (T) and/or number (N) of nozzles (6) and/or the nozzle position (P) on the other hand.

8. Method according to one of the preceding claims, further comprising automatically determining, in particular based on the box size data (BS) and/or the determined speed (S) of the boxes (20), a time delay (TD) between detection of a box (20) with the sensor device (21) and performing a spray process in which fluid (F) is sprayed towards the box (20).

9. Method according to one of the preceding claims, further comprising receiving adjustment data representing a desired adjustment of a fluid volume to be sprayed in single spray process and adjusting a set fluid volume based on the adjustment data, in particular wherein the method comprises displaying with an electronic display device at least one field for entering the adjustment data and receiving with the electronic display device adjustment data entered in the at least one field.

10. Method according to one of the preceding claims, further comprising:
- receiving sensor signals (SS) in a sensor device (21) with different sensors (22), the different sensors (22) detecting boxes (20) being conveyed on different conveyor lines (19), and
- automatically determining said type (T) and/or number (N) of nozzles (6) and/or said nozzle positions (P) separately for different nozzles (6) assigned to the different conveyor lines (19).

11. Method according to one of the preceding claims, further comprising placing the spraying device (1) in the vicinity of a conveying device (17), so that the spraying device (1) can spray fluid (F) towards the conveying device (17) or boxes (20) being conveyed by the conveying device (17).

12. Method according to claim 11, further comprising:
- placing boxes (20) on the conveying device (17), and/or
- conveying the boxes (20) past the spraying device (1) with the conveying device (17), and/or
- detecting the boxes (20) being conveyed past the conveying device (17) with the sensor device (21), and/or
- installing the determined type (T) and/or number (N) of nozzles (6) and/or installing a nozzle (6) in the determined nozzle position (P).

13. Spraying device (1) for spraying a fluid, in particular a liquid vaccine solution, the spraying device (1) having a sensor device (21) and means adapted to execute the steps of a method according to one of the preceding claims.

14. Spraying device according to claim 14, wherein the spraying device (1) has a spray unit (2), the spray unit (2) having an inlet (3) through which the fluid (F) can be supplied to the spray unit (2), a pump (4) with a pump chamber (5), and a nozzle (6) for spraying the fluid (F), wherein the inlet (3) is connected to the pump chamber (5) and the pump chamber (5) is connected to the nozzle (6), so that fluid (F) can flow from the inlet (3) to the pump chamber (5) and from the pump chamber (5) to the nozzle (6), wherein the spray unit (2) comprises an inlet valve (9) arranged between the inlet (3) and the pump chamber (5) and an outlet valve (10) arranged between the pump chamber (5) and the nozzle (6), and wherein the outlet valve (10) is a controllable valve.

15. Computer program product comprising instructions to cause the spraying device (1) of claim 14 to execute the steps of the method of one of claims 1 to 13.

16. Computer-readable storage medium having stored thereon the computer program product of claim 15.
